# EUROPEAN PATENT APPLICATION

(11) **EP 1 793 583 A1**
(43) Date of publication of application: **06.06.2007**
(21) Application number: 04773207.8
(22) Date of filing: 16.09.2004
(51) Int. Cl.: H04N 1/387, G06T 1/00

(54) **IMAGE REPLICATION CONTROL APPARATUS, IMAGE REPLICATION CONTROL METHOD, IMAGE PRODUCING APPARATUS, IMAGE PRODUCING METHOD, PROGRAM, AND IMAGE REPLICATING APPARATUS**

(71) Applicant: Fujitsu Ltd., Kawasaki-shi, Kanagawa 211-8588 (JP)
(72) Inventor: CHIBA, Hirotaka, c/o Fujitsu Limited, Kawasaki-shi, Kanagawa 2118588 (JP); NODA, Tsugio, c/o Fujitsu Limited, Kawasaki-shi, Kanagawa 2118588 (JP)
(74) Representative: Hitching, Peter Matthew
(86) International application number: PCT/JP2004/013563
(87) International publication number: WO 2006/030514

(57) **Abstract**

Image identifier information specific to image data to be input to an image duplication apparatus is embedded in the image data as a steganography in advance. Meanwhile, on the side of an image (duplication apparatus, a duplication control apparatus comprised therein decodes the steganography contained in image data, detects the image identifier information, compares the detected image identifier information with pre-assigned license information and permits a duplication operation such as printing onto a print medium or storing into a storage medium if the aforementioned two kinds of information are identical.

## Description

### Technical Field

The present invention relates to an image duplication control technique, image production technique and program, and in particular to an effectively technique applicable to a duplication control technique, et cetera, for controlling a duplication of image information in an image display apparatus, such as a monitor for outputting a moving and static images, an image output apparatus, such as a printer for outputting a static image, and an image input apparatus, such as a camera, scanner, et cetera, for duplicating a printed matter by inputting it thereto.

### Background Art

Keeping pace with the development of an information society using computers, the distribution of written materials by means of digitized data has become a compulsory requirement, demanding a duplication management technique for handling digitized written matters accurately.

Conventionally proposed is a method of using an electronic watermark as a method for preventing the duplication of a moving image and of a static image as electronic data, of printed matter, et cetera. The electronic watermark embeds, and detects, duplication inhibit information by utilizing a mere one bit difference of a digital data expression of a written matter.

Therefore, a duplication apparatus used for inhibiting a duplication has required a build-in design with a combination of a data compression/expansion apparatus handling data in a digital level, et cetera, for example, as a system in a moving image output apparatus, such as a television (TV) apparatus, and a printing apparatus starting from development and manufacturing stages for enabling processing in a digital data level as shown in a patent document 1.

In the case of duplicating a printed matter which is printed on a medium, such as a piece of paper, with image data as a target of duplication, a data input at an image readout apparatus, such as a digital camera, image scanner and scanner/printer, in the process of which, that is, during the process of outputting (i.e., of printing the image data) and inputting (i.e., of reading image data) the image data is once converted into analog data, losing a nature of digital data, and thus being unable to extract the above noted duplication inhibit information of the electronic watermark.

An increased intensity of an electronic watermark in an attempt to strengthen resistance to an analog conversion degrades an image quality of image information caused by an increased volume of information which is embedded as an electronic watermark, resulting in being unable to prevent duplication without allowing a degradation of a printed image quality.

Patent document 1: Laid-Open Japanese Patent Application Publication No. 2002-176550

### Disclosure of Invention

A purpose or the present invention is to provide an image duplication control technique enabling an easy incorporation to diverse apparatuses for displaying, and duplicating, image information.

Another purpose of the present invention is to provide an image duplication control technique capable of accomplishing a duplication control of image information regardless of an analog or digital state of the image information.

Another purpose of the present invention is to provide an image duplication control technique capable of accomplishing a duplication control of image information without degrading an image quality of the image information.

Another purpose of the present invention is to provide an image duplication control technique capable of accomplishing a duplication control of image information existing in various image medium.

A first aspect of the present invention is to provide an image duplication control apparatus comprising: an identifier information detection unit for extracting identifier information from image information in which the identifier information is embedded as secret information;
a permission condition input unit for inputting a duplication permission condition of the image information; and
a duplication judgment unit for controlling a duplication operation based on whether or not the identifier information and duplication permission condition are identical.
A second aspect of the present invention is to provide an image duplication control method, comprising the steps of:
   inputting, from an image medium, image information in which identifier information is embedded as secret information;
   extracting the identifier information from the image information;
   inputting a duplication permission condition for the image information; and
   controlling an operation of duplicating the image information based on whether or not the identifier information and duplication permission condition are identical.

A third aspect of the present invention is to provide an image production apparatus, comprising:
an input unit for inputting image information;
a steganography embedment unit for embedding identifier information utilized as a duplication condition for the image information in the aforementioned image information as a steganography which is not lost as a result of converting the image information into analog; and
an image output unit for outputting, to an image medium, the image information in which the steganography is embedded.

A fourth aspect of the present invention is to provide an image production method, comprising the steps of:
inputting image information;
embedding identifier information utilized as a duplication condition for the image information in the aforementioned image information as a steganography which is not lost as a result of converting the image information into analog; and
outputting, to an image medium, the image information in which the steganography is embedded.

A fifth aspect of the present invention is to provide a program for making a computer constituting an image duplication apparatus execute the steps of:
inputting, from an image medium, image information in which identifier information is embedded as secret information;
extracting the identifier information from the image information;
inputting a duplication permission condition for the image information; and
controlling an operation of duplicating the image information based on the identifier information and duplication permission condition.

A sixth aspect of the present invention is to provide a program for making a computer which controls an image production apparatus execute the steps of:
inputting image information;
embedding identifier information utilized as a duplication condition for the image information in the aforementioned image information as a steganography which is not lost as a result of converting the image information, into analog; and
outputting, to an image medium, the image information in which the steganography is embedded.

A seventh aspect of the present invention is to provide an image duplication apparatus, comprising:
an image construction unit for reconstruct digital image data from analog screen image data of a moving and/or static images in which identifier information is recorded as a steganography;
a identifier image detection unit for detecting identifier information embedded in the image data;
a duplication permission input unit for inputting a duplication permission condition; and
a duplication, judgment unit for judging a duplication based on the identifier information detected by the identifier image detection unit and the permission condition which is input by the duplication permission input unit.

An eighth aspect of the present invention is to provide an image duplication apparatus, comprising:
an image input unit for converting to image data by inputting a printed matter on which identifier information is recorded as a steganography;
an identifier information detection unit for detecting identifier information embedded in the image data;
a duplication permission input unit for inputting a duplication permission condition; and
a duplication judgment unit for judging a permissibility of duplication based on the identifier information detected by the identifier image detection unit and the permission condition which is input by the duplication permission input unit.

The present invention is contrived to embed identifier information in a moving image or static image by means of a steganography making it possible to extract the embedded identifier information even after a printing process, or a conversion process to an analog signal, and places a duplication control apparatus between a display apparatus and a printing apparatus connected thereto by an analog signal, thereby limiting duplication, for example.

A method of using an electronic watermark has conventionally been employed for preventing the duplication of a screen image or static image data, the method, however, has not enabled an extraction of inhibit information at the time of converting screen image data, for example, to an analog signal at a printing apparatus connected to a display apparatus by an analog signal. Contrarily, the present invention makes it possible to carry out a duplication control by embedding identifier information by means of a steganography, and by extracting the identifier information.

The present invention is also contrived to embed identifier information in a printed matter by means of a steganography making it possible to extract the embedded identifier information even after reading the printed matter printed on a media such as paper by using an image readout apparatus followed by converting the readout data into image data, and place the present duplication control apparatus between the image readout apparatus and a storage apparatus, thereby limiting duplication.

In the case of duplicating a printed matter printed on a medium such as paper, the process of printing (i.e., outputting) and reading (i.e., inputting) loses the state of digital data, the present invention, however, makes it possible to accomplish a duplication control by embedding identifier information in a printed matter by means of a steganography and extracting the identifier information.

In this case, a simple duplication control can be accomplished by judging for permitting duplication by identicalness of the identifier information embedded by means of the steganography with identifier information which is input as a permission of duplication. For instance, it is controlled so as to enable duplication of target image data by a user of the image data purchasing the identifier information for a permission of duplication and inputting it to an image duplication apparatus.

In the case of controlling a permission or otherwise of duplication by an identicalness or non-identicalness of identifier information, there is a case of a need to limit the number of duplicates for each user, for instance. Accordingly, a limitation of the number of duplicates for each piece of image data is accomplished by a control in a manner to store the number of times of duplication for each piece of identifier information in image data, permit duplication within the permitted number thereof and inhibit duplication exceeding the aforementioned number.

Furthermore, there is a case of needing to permit only one time of duplication (i.e., the first generation of duplicate) and inhibit a duplicate of the first generation of duplicate (i.e., the second generation of duplicate). A management of duplication exceeding a certain generation is accordingly accomplished by embedding new identifier information in the duplicated image data on an as required basis by means of a steganography.

There is also a case of needing to implementing a history management (i.e., a tracing) of image data per se by managing as to by whom or on which duplication apparatus a permitted duplicate has been made. Accordingly, a management of a duplication path and of a duplication history is accomplished by using identifier information for identifying a duplication apparatus as identifier information embedded in duplicated image data and identifier information of the user.

### Brief Description of Drawings

Fig. 1 is a block diagram exemplifying a comprisal of an image duplication apparatus including an image duplication control apparatus according to an embodiment of the present invention;
Fig. 2 is a block diagram exemplifying a comprisal of an image duplication control apparatus according to an embodiment of the present invention;
Fig. 3 is a conceptual diagram exemplifies a comprisal of a computer system for implementing an image duplication apparatus according to an embodiment of the present invention;
Fig. 4 is a conceptual diagram exemplifies a comprisal of an image production apparatus according to an embodiment of the present invention;
Fig. 5 is a conceptual diagram exemplifying operations of an image production apparatus and a duplication control apparatus according to an embodiment of the present invention;
Fig. 6 is a flow chart exemplifying operations of an image duplication apparatus and a duplication control apparatus according to an embodiment of the present invention;
Fig. 7 is a conceptual diagram exemplifies a comprisal of an image duplication apparatus according to another embodiment of the present invention;
Fig. 8 is a conceptual diagram exemplifies operations of an image duplication apparatus and a duplication control apparatus according to an embodiment of the present invention;
Fig. 9 is a conceptual diagram showing a modified example of a duplication judgment unit in an image duplication apparatus and a duplication control apparatus according to an embodiment of the present invention;
Fig. 10 is a flow chart exemplifying an operation of a modified example of a duplication judgment unit in an image duplication unit and a duplication control apparatus according to an embodiment of the present invention;
Fig. 11 is a conceptual diagram exemplifying a comprisal of an image duplication apparatus according to yet another embodiment of the present invention;
Fig. 12 is a conceptual diagram exemplifying a comprisal of an image duplication apparatus according to yet another embodiment of the present invention;
Fig. 13 is a flow chart exemplifying an operation of an image duplication apparatus according to yet another embodiment of the present invention; and
Fig. 14 is a conceptual diagram showing an image duplication apparatus and a modified example thereof according to yet another embodiment of the present invention.

### Best Mode for Carrying Out the Invention

The following is a detailed description of the preferred embodiment of the present invention by referring to the accompanying drawings. Note that the present specification defines the "duplication" of image data as not only outputting the aforementioned image data to a discretionary image medium, such as a communication medium, storage medium, print medium, et cetera, but also outputting as a visual showing in a display, et cetera.

In the following description, a common component sign is attached to a common component used across individual embodiments, modified examples, et cetera, shown in the respective drawings and a duplicate description is omitted.

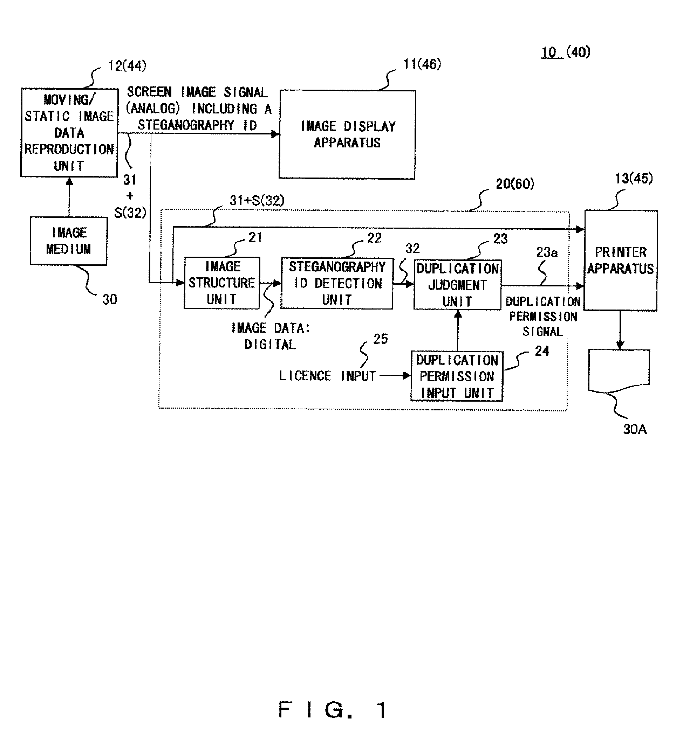

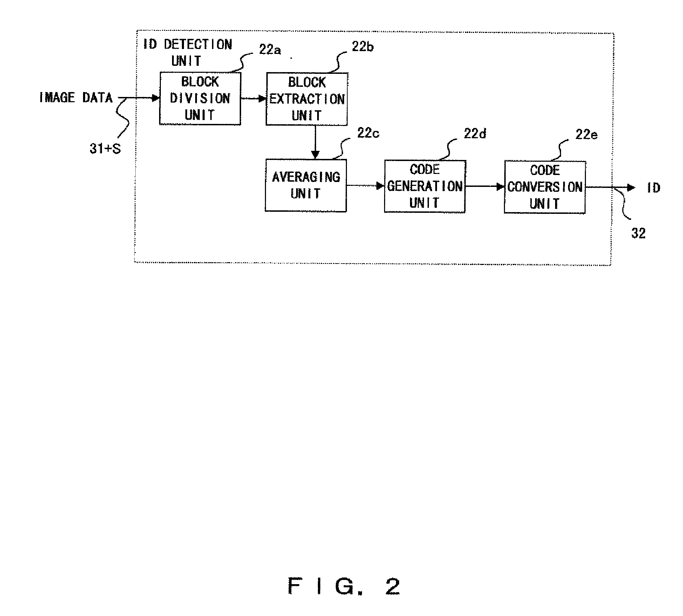

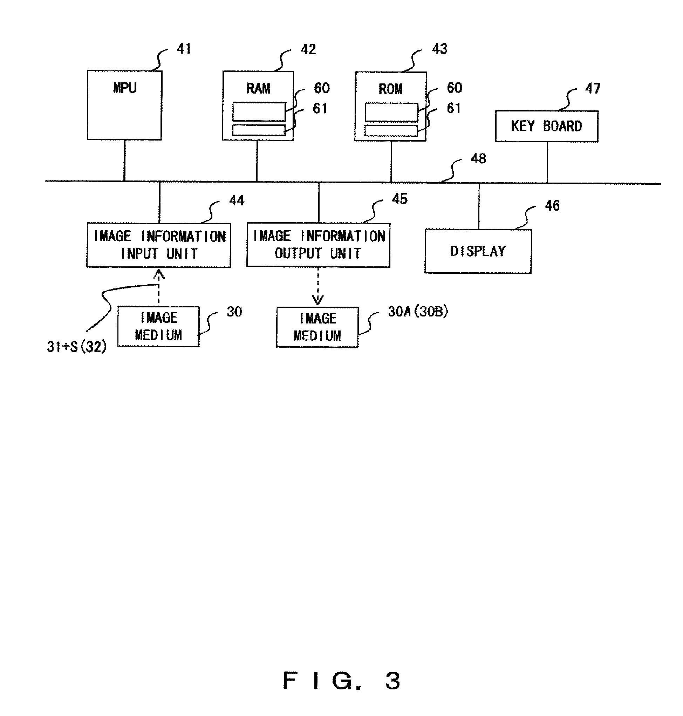

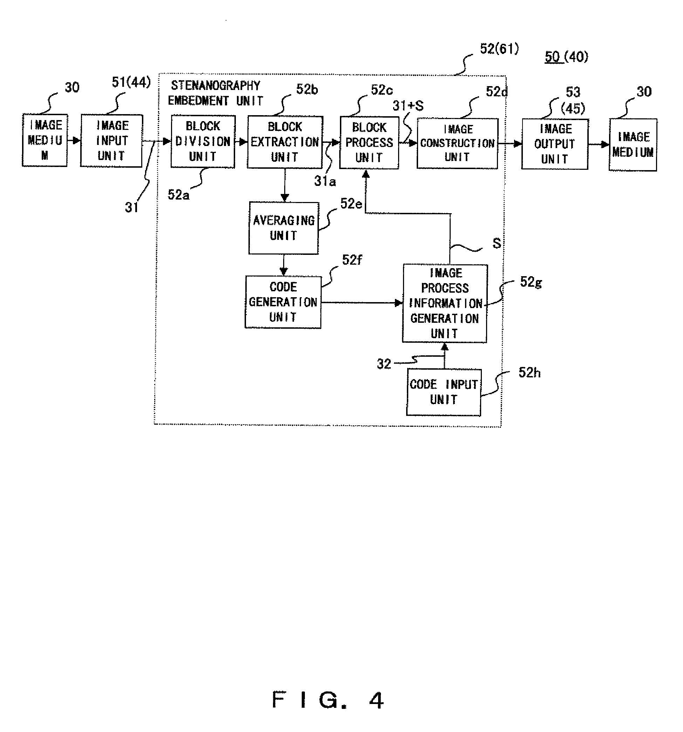

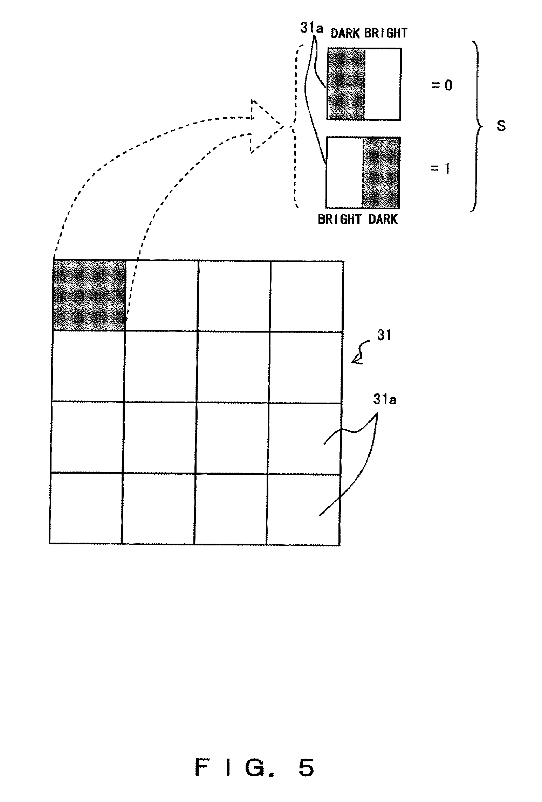

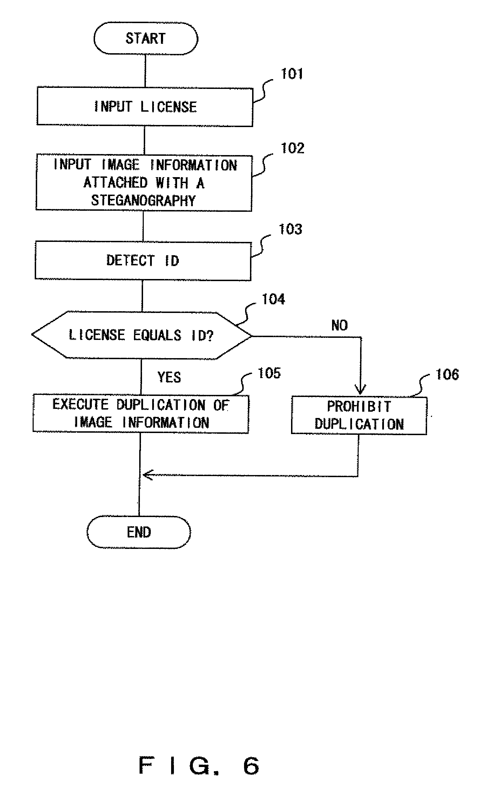

Fig. 1 is a block diagram exemplifying a comprisal of an image duplication apparatus including an image duplication control apparatus according to an embodiment of the present invention; Fig. 2 is a block diagram exemplifying a. comprisal of the image duplication control apparatus (also abbreviated as "duplication control apparatus" herein) according to the present embodiment; Fig. 3 is a conceptual diagram exemplifies a comprisal of a computer system used for implementing the image duplication apparatus according to the present embodiment; Fig. 4 is a conceptual diagram exemplifies a comprisal of an image production apparatus according to an embodiment of the present invention; Fig. 5 is a conceptual diagram exemplifying operations of the image production apparatus and a duplication control apparatus according to the present embodiment; and Fig. 6 is a flow chart exemplifying operations of the image duplication apparatus and image duplication control apparatus according to the present embodiment.

As exemplified in Fig. 1, an image duplication apparatus 10 comprises an image display apparatus 11, an image data reproduction unit 12 for reproducing an analog screen image signal from a desired image medium 30 and inputting it as image data 31 to the image display apparatus 11 and a printer apparatus 13 for printing the image data 31 onto an image medium 30A such as an paper.

The present embodiment is configured to record identifier information (i.e., an image ID 32) specifically assigned to image data 31, which is mixed therewith as a steganography S that is secret information, in the present image data 31 of an image medium 30 without degrading an image quality of the image data 31 and also in the state of being hardly visible to the naked eyes reading the image data by means of the image display apparatus. That is, the steganography according to the present embodiment is a technique of embedding discretionary information in the image data 31 as a secret state by taking advantage of a visual characteristic of human eye which changes sensitivity depending on the color and size of an object as described later.

That is, the present embodiment is so configured that the steganography S divides the image data 31 into a plurality of blocks, converts the image ID 32 into a code by manipulating characteristic information of an individual block and/or between blocks in the range of a human vision being hardly capable of discerning and embeds the code in the image data 31, for example.

Characteristic information of a block, or a sub-block which is a division of the aforementioned block, may use any value provided one which is obtained from the image data 31, such as a positional relationship between individual blocks, contrast, graininess of image, color saturation, gravity center of density, deconcentration, et cetera.

The input path of analog image data 31 to the printer apparatus 13 is equipped with a duplication control apparatus 20 which comprises an image structure unit 21 for converting analog image data 31 into digital data, a steganography ID detection unit 22 for extracting from the image data 31 an image 1D 32 recorded as steganography S, a duplication judgment unit 23 and a duplication permission input unit 24 for externally inputting license information 25.

The duplication judgment unit 23 compares the image ID 32 extracted from the image data 31 by the steganography ID detection unit 22 with the license information 25 which is input by the duplication permission input unit 24 and, if the aforementioned two kinds of information are identical, outputs a duplication permission signal 23a to the printer apparatus 13.

As exemplified in Fig. 2, the steganography ID detection unit 22 comprises a block division unit 22a and a block extraction unit 22b for dividing the image data 31 embedded with steganography S into a plurality of image blocks 31a and selecting/extracting it according to a prescribed rule; an averaging unit 22c for normalizing brightness levels, for example, of individual image blocks 31a; a code generation unit 22d for dividing the normalized image block 31a into two sub-blocks (on the left and right sides) and performing a coding (refer to Fig. 5) which assigns "0" or "1", depending on which of the left and right divided blocks is brighter; and a code conversion unit 22e for outputting, as an image ID 32, by applying a prescribed arithmetic operation to a result of the coding of the individual image blocks 31a.

The image duplication apparatus 10 and duplication control apparatus 20 can be implemented, for example, by a computer system 40 and a duplication control program 60 executed by the computer system 40 which are exemplified by Fig. 3.

That is, the computer system 40 according to the present embodiment comprises a microprocessor 41 for controlling the entirety thereof, a main storage 42 storing information such as a program and data executed by the microprocessor 41, a nonvolatile storage apparatus 43 retaining information such as the aforementioned program and data permanently, an image information input unit 44 for inputting image data 31 from a discretionary image medium 30, an image information output unit 45 for outputting image data 31 to a discretionary image medium 30, a display 46 for visually displaying information such as image data 31, a key board 47 used for a user inputting information and a bus 48 as an information transmission path connecting those aforementioned components.

The nonvolatile storage apparatus 43 stores the duplication control program 60 for accomplishing the functions of respective constituent units of the image duplication apparatus 10 and duplication control apparatus 20. And the functions of the respective units of the image duplication apparatus 10 and duplication control apparatus 20 are accomplished by loading the duplication control program 60 in the main storage 42 and executing the program 60 by the microprocessor 41.

That is, in the case of implementing the image duplication apparatus 10 exemplified in Fig. 1 by means of the computer system 40 exemplified in Fig. 3, the image display apparatus 11 corresponds to the display 46, the image data reproduction unit 12 corresponds to the image information input unit 44, the printer apparatus 13 corresponds to the information output unit 45 and the function of the duplication control apparatus 20 is accomplished by the duplication control program 60.

The concept of "image medium" comprehends a printing media such as paper, et cetera, a communication media such as information and telecommunication line, et cetera, and a storage medium such as semiconductor memory, optical storage medium, magnetic storage medium, et cetera, according to the present embodiment.

At this point, a description is on an example of an image production apparatus 50 for outputting image data 31, with an image ID 32 being mixed therewith as a steganography S, to a discretionary image medium 30, by referring to Fig. 4.

The image production apparatus 50 according to the present embodiment comprises an image input unit 51 for inputting the image data 31 from the image medium 30, a steganography embedment unit 52 for embedding the image ID 32 specifically designated for present image data 31 therein as a steganography S, and an image output unit 53 for outputting the image data 31 embedded with the steganography S to the original image medium 30 or another image medium 30.

The steganography embedment unit 52_ comprises a block division unit 52a, a block extraction unit 52b, a block process unit 52c, an image construction unit 52d, an averaging unit 52e, a code generation unit 52f, an image process information generation unit 52g and a code input unit 52h.

The information such as the image ID 32, et cetera, to be embedded in the present image data 31 as a steganography S is externally designated or input to the code input unit 52h.

The block division unit 52a and block extraction unit 52b divide the image data 31 digitized by the image input unit 51 into a plurality of blocks, and extract them individually according to a prescribed rule and send them out to the averaging unit 52e and block process unit 52c.

The averaging unit 52e normalizes, for example, brightness levels of individual image blocks 31a. The code generation unit 52f divides the image block 31a normalized by the averaging unit 52e into two sub-blocks of the left and right sides and performs a coding, assigning "0" or "1" depending on either of the left and right sub-blocks being brighter and outputs it to the image process information generation unit 52g.

Fig. 5 shows the principle of the above noted coding related to a steganography S in the duplication control apparatus 20 and image production apparatus 50 according to the present embodiment.

The image process information generation unit 52g discerns whether the brightness of the left and right sub-blocks of the image block 31a is to be used as is or reversed in order to respond to the image ID 32 so as to reflect the image ID 32 designated to the code input unit 52h eventually to the steganography S, and instructs the block process unit 52c with the discerning result.

The block process unit 52c maintains the levels of brightness of the left and right blocks as is for the image block 31a coming in from the block extraction unit 52b, or applies, to the aforementioned image block 31a, the process of reversing them for responding to the image ID 32 based on the instruction from the image process information generation unit 52g, thereby carrying out the process of embedding, in the image data 31, a steganography S expressing the image ID 32 designated at the code input unit 52h.

That is, for example, even though a brightness component of yellow, which is supposed to be low on the sensitivity of an observing naked human eyes, is changed between the left and right sub-blocks, the naked eyes cannot recognize, thereby making it possible to embed the image ID 32 in the image data 31 as a steganography S without being noticed by an observer, that is, without degrading an image quality of the image data 31. Even if it is output as analog to a printing and a displaying, there is only a little variance because the image block 31a is handled as a unit, thereby enabling the accomplishment of a stable coding.

An alternative configuration may be in a manner to embed a plurality of the same image IDs 32 as steganography S redundantly on an as required basis in image data 31 and determine a single image ID 32 eventually based on the rule of majority among the plurality of image IDs 32 detected from the image data 31.

The image construction unit 52d constructs the original image data 31 by arraying the plurality of image blocks 31a, converts it into analog on an as required basis and outputs it to a discretionary image medium 30 by way of the image output unit 53.

As such, the steganography embedded in the image data 31 by the image production apparatus 50, et cetera, is decoded by the above described steganography ID detection unit 22 and the image ID 32 is detected.

Note that the image production apparatus 50 is incorporated in the above described computer system 40 shown in Fig. 3 and is implemented by an image data production program 61 installed in the computer system 40 and executed by the microprocessor 41.

That is, the image input unit 51 corresponds to the image information input unit 44, the image output unit 53 corresponds to the image information output unit 45 and the steganography embedment unit 52 corresponds to the image data production program 61.

Note that the principle of embedding and detecting the above described steganography is an example, and is possible to use a technique disclosed by a Laid-Open Japanese Patent Application Publication No. 2004-94551 for example for further detail.

The following is a description on an example operation of the image duplication apparatus 10 and duplication control apparatus 20 according to the present embodiment by referring to the flow chart shown in Fig. 6, et cetera.

First, the duplication control apparatus 20 comprised in the image duplication apparatus 10 inputs license information 25 for example, which is identifier information specific to image data 31 provided by an issuing entity of the present image data 31 in advance, into the duplication permission input unit 24 (step 101).

Then, in the image duplication apparatus 10, the image data 31 of a moving or static image embedded with an image ID 32 by means of steganography S is reproduced by the image data reproduction unit 12 and is sent to the image display apparatus 11 as a screen image signal (i.e., analog) to be displayed therein.

Meanwhile, the screen image signal (i.e., analog) is restructured from an analog screen image signal to digital image data 31 by the image structure unit 21 of the duplication control apparatus 20 (step 102), followed by the steganography ID detection unit 22 extracting the image ID 32 by the above described decoding process of the steganography S (step 103).

The duplication judgment unit 23 judges for duplication based on an identicalness or non-identicalness of the extracted image ID 32 with the license information 25 (i.e., a permission condition) input by the duplication permission input unit 24 (step 104), thereby outputting a duplication permission signal 23a. The printer apparatus 13 receives the screen image signal and duplication permission signal 23a and, only in the case of duplication being permitted, performs the operation of printing and outputting the image data 31 of the screen image onto an image medium 30A such as a paper medium, et cetera (step 105), while, in the case of duplication being prohibited, does not output to an image medium 30A (step 106).

As described above, the processes of embedding an image ID 32 in the image data 31 by means of steganography S and extracting the image ID 32 from the image data 31 by means of steganography S at the time of duplication make it possible to accomplish a duplication control on the image data 31 in the analog state.

And the steganography S is hardly lost throughout the process of the image data 31 changing to an analog state as described above, and therefore a secure duplication control is enabled for an analog output of the image data 31 in the image display apparatus 11 or printer apparatus 13.

Therefore, it is possible to provide an image duplication control technique easily incorporated into various kinds of apparatuses displaying and/or duplicating the image data 31.

It is also possible to accomplish a duplication control of the image data 31 independent of the present image data 31 being in an analog state or digital state, thus enabling an accomplishment of the image data 31 existing in various image media 30.

It is further possible to accomplish a duplication control of image information without degrading an image quality of the image information of the image data 31 since the steganography S is embedded in the image data 31 so as to be hardly visible by taking advantage of a visual characteristic of human beings.

Note that the above description of the flow chart shown in Fig. 6 exemplifies the case of permitting duplication of the image data 31 at the printer apparatus 13 if the image ID 32 embedded in the present image data 31 as a steganography S is identical with the license information 25; an inverse control may also be viable, however.

That is, an image ID 32 can be embedded in image data 31 to be prohibited of duplication as a steganography S, and the duplication control apparatus 20 can be enabled to prohibit an output of the image data 31 to the printer apparatus 13 if the image ID 32 is identical with the license information 25. This configuration is capable of accomplishing, for example, a counterfeit prevention of image data of bank notes, securities, et cetera, by duplication, an output prohibition of image data 31 of which a printing or displaying is to be avoided, and other prohibition.

Also, characteristic information possessed by image data 31 per se may be used as an image ID 32, in lieu of being limited to the embedment an image ID 32 in the present image data 31 intentionally as a steganography S. That is, characteristic information obtained in the event of performing an extraction operation on an image ID 32 by a prescribed algorithm by means of the steganography S is preset in the duplication control apparatus 20 as license information 25 in an original state of image data 31 without a steganography S being embedded, followed by using the present image ID 32 for a duplication judgment as the license information when inputting the image data 31, thereby making it possible to accomplish a permission or prohibition control of duplication based on an authenticity judgment of the image data 31.

Furthermore, a permissibility of displaying image data 31 at the image display apparatus 11 may be controlled based on license information 25 and an image ID 32 embedded in the image data 31 as a steganography S by inputting, to the image display apparatus 11, a duplication permission signal 23a which is output from the duplication judgment unit 23.

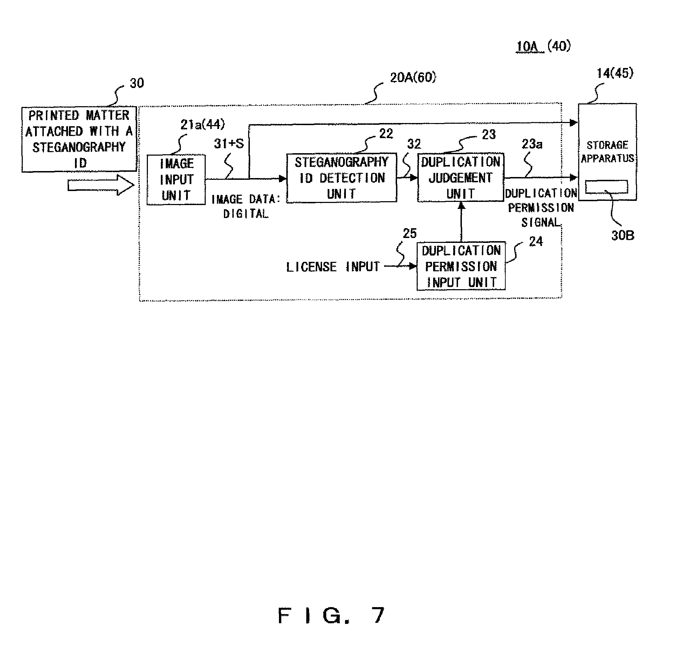

Fig. 7 is a conceptual diagram exemplifies a comprisal of an image duplication apparatus 10A according to another embodiment of the present invention.

The image duplication apparatus 10A, comprising a duplication control apparatus 20A and a storage apparatus 14, is configured to control in the case of duplicating image data 31, which is embedded with a steganography S and is retained on an image medium 30, that is, a printed matter, into an image medium 30B of the storage apparatus 14.

That is, the duplication control apparatus 20A is the same as the duplication control apparatus 20 except for the former comprising an image input unit 21a which is a scanner or camera for inputting image data 31 as digital data from an image medium 30, that is, a printed matter, in place of the image structure unit 21 comprised by the duplication control apparatus 20 exemplified in Fig. 1.

The image duplication apparatus 10A is also implemented by the computer system 40 and duplication control program 60 which are exemplified in Fig. 3. In such a case, the image input unit 21a corresponds to the image information input unit 44, and the storage apparatus 14 corresponds to the image information output unit 45, while other functions can be accomplished by the duplication control program 60.

And, the image data 31 of the image medium 30 such as a printed matter embedded with an image ID 32 by means of a steganography S is input at the image input unit 21a and transmitted to the steganography ID detection unit 22. The image ID 32 is extracted by a decode process (i.e., a detection process) of the steganography S at the steganography ID detection unit 22. The duplication judgment unit 23 makes a judgment for a permissibility of duplication according the extracted image ID 32 and a permission condition (i.e., license information 25) input at the duplication permission input unit 24, and then outputs a duplication permission signal 23a to the storage apparatus 14. Having received the image data 31 and duplication permission signal 23a, the storage apparatus 14 performs a duplication operation for storing the image data 31 in the image medium 30B only if the duplication permission signal 23a indicates a permission of duplication.

As described above, a duplication control of the image data 31 can be accomplished by embedding the image ID 32 by means of the steganography S in the image data 31 of the image medium 30 that is a printed matter, followed by extracting the image ID 32.

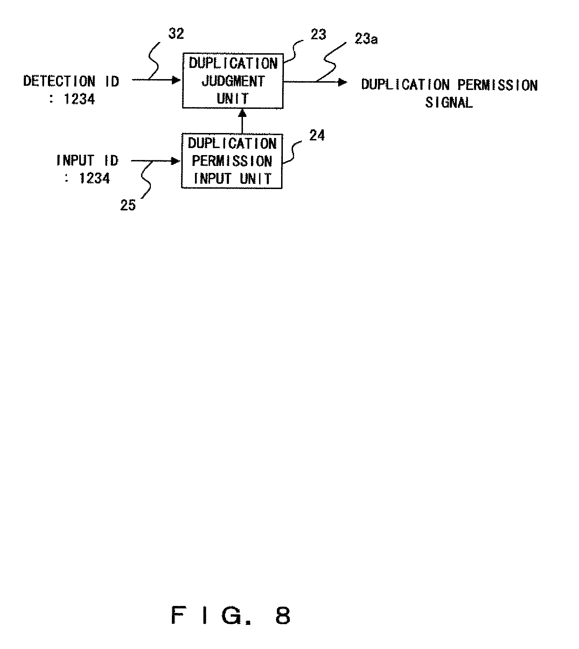

For example, if the image ID 32 detected from the image data 31 as a steganography S is "1234" and the license information 25 input from the duplication permission input unit 24 is "1234", both of them being identical as exemplified in Fig. 8, the duplication judgment unit 23 inputs a duplication permission signal 23a indicating a permission of duplication to the storage apparatus 14 for duplication to be carried out.

For example, a control can be such that the duplication of target image data 31 is enabled by a user wishing to duplicate the image data 31 of an image medium 30 purchasing license information 25 permitting duplication from an issuer and inputting it to the duplication permission input unit 24 of the image duplication apparatus 10A. An alternative control may be such that a permission of duplication is provided if a part of the image ID 32 is identical with the license information 25.

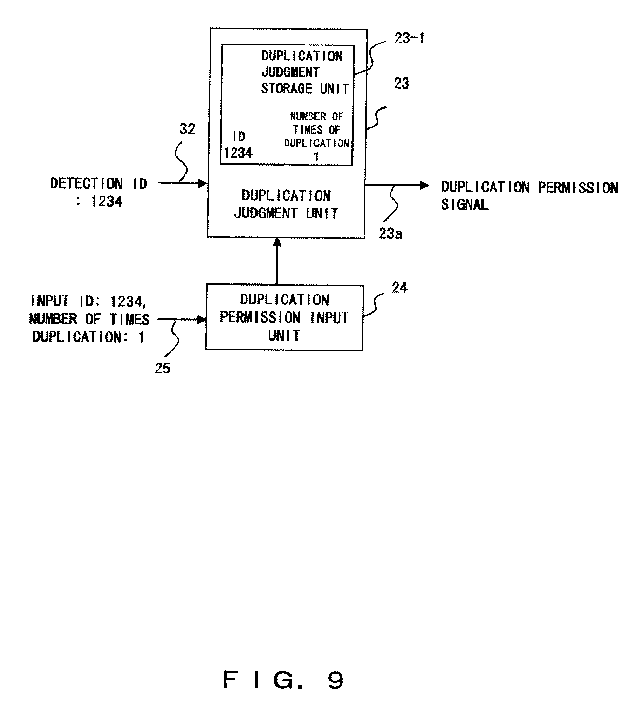

Fig. 9 is a conceptual diagram showing a modified example of the duplication judgment unit 23 in the above described duplication control apparatus 20 and duplication control apparatus 20A. In the case of this modified example, the duplication judgment unit 23 is internally equipped with a duplication judgment storage unit 23-1, storing a limit value of the number of duplicates indicating an upper limit of the number of duplicates or the number of times of duplication related to each image ID 32.

And the duplication judgment unit 23 counts the number of actual duplicates of the image data 31 based on the number of output times of duplication permission signals 23a and, if the count value reaches the limit value set in the duplication judgment storage unit 23-1, prohibits duplication thereafter. Such control makes it possible to manage the upper limit of the number of times of duplication or the number of duplicates for each image ID 32.

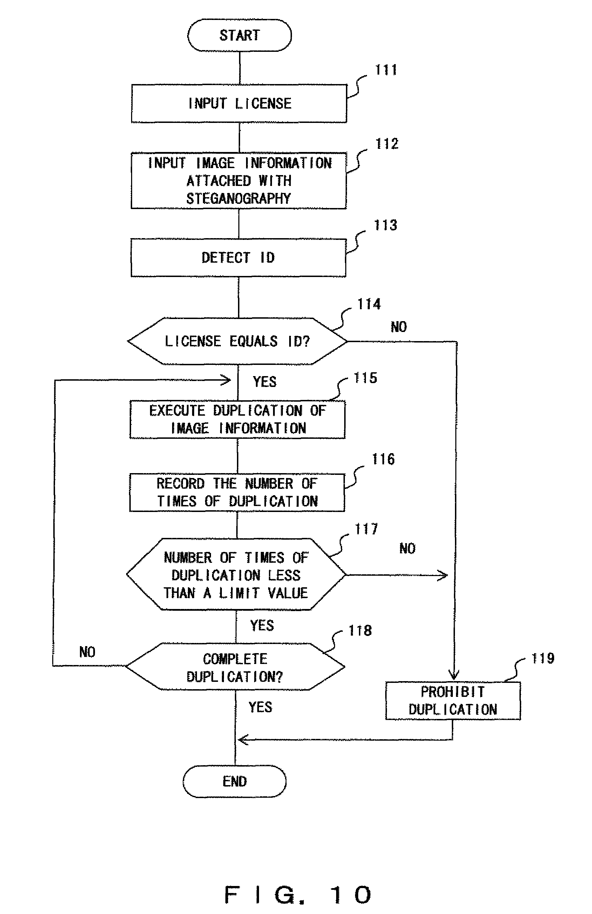

The following is a description on an operation of the modified example by referring to the flow chart shown in Fig. 10.

The first step sets license information 25 in the duplication permission input unit 24 (step 111), followed by inputting image information 31 embedded with an image ID 32 by way of a steganography S from the image input unit 21a (step 112), and detecting the image ID 32 from the steganography S at the steganography ID detection unit 22 (step 113).

The next judges whether or not the image ID 32 detected from the image data 31 is identical with the license information 25 (step 114) and, if it is identical, carries out a duplication operation of outputting the image data 31 to the storage apparatus 14 (step 115) and records the number of times of duplication (step 116).

The next judges whether or not the number of times of duplication has exceeded a limit value (step 117) and, if it has not, judges whether or not the target number of duplicates are complete (step 118) and, if it is not complete, the process repeats the processes of the step 115 and thereafter, while if it is complete, ends the duplication.

Meanwhile, if the number of times of duplication has exceeded the limit number in the step 117, the process stops the duplication (step 119).

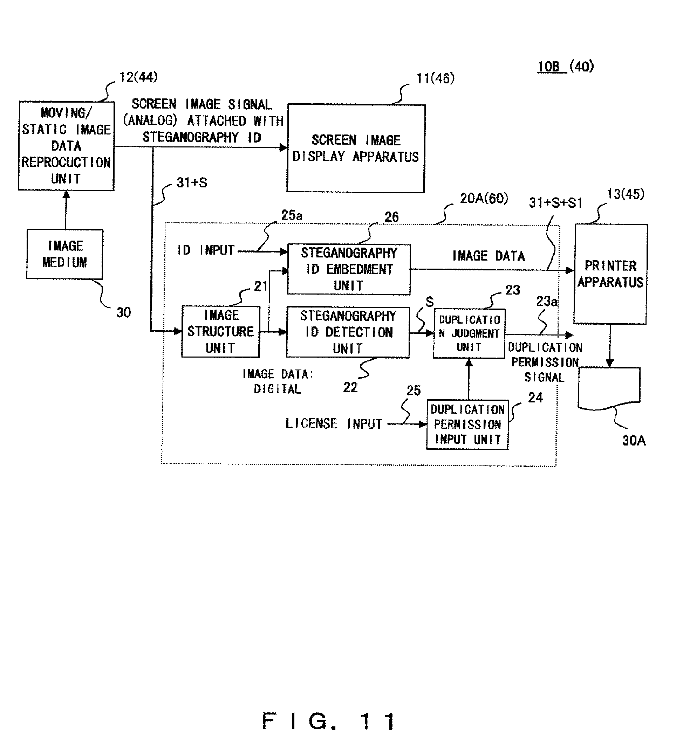

Fig. 11 is a conceptual diagram exemplifying a comprisal of an image duplication apparatus according to yet another embodiment of the present invention.

The image duplication apparatus 10B shown in Fig. 11 is the duplication control apparatus 20A, which is comprised by the above described image duplication apparatus 10 exemplified in Fig. 1, internally equipped with a steganography ID embedment unit 26.

For instance, there is a case of permitting a duplicate of image data 31 only one time (i.e., the first generation) and prohibiting a duplication operation for making the second generation of a duplicate from image data 31 of the first generation. A management of duplication exceeding a certain generation can be implemented by embedding new identifier information (e.g., a history management ID 25a) as a steganography S1 in the image data 31 embedded with an image ID 32 by means of a steganography S at the image duplication apparatus 10B duplicating the present image data 31.

That is, when printing original image data 31 embedded with an image ID 32 as a steganography S onto an image medium 30A, the history management ID 25a is further embedded as a steganography S1 in the image data 31, which is printed on the image medium 30A, in addition to the image ID 32 as a steganography S.

Therefore, in the case of duplicating the image medium 30A as input media, an operation of making a duplicate from the present duplicate can be controlled by detecting a presence or absence of a history management ID 25a (i.e., a steganography S1) from the image data 31, enabling a discernment of whether the present image data is the original or a duplicate.

Note that the steganography ID embedment unit 26 for performing an embedment operation of the history management ID 25a as a steganography S1 in the image data 31 can be implemented by the same comprisal as the steganography embedment unit 52 of the above described image production apparatus 50 exemplified in Fig. 4.

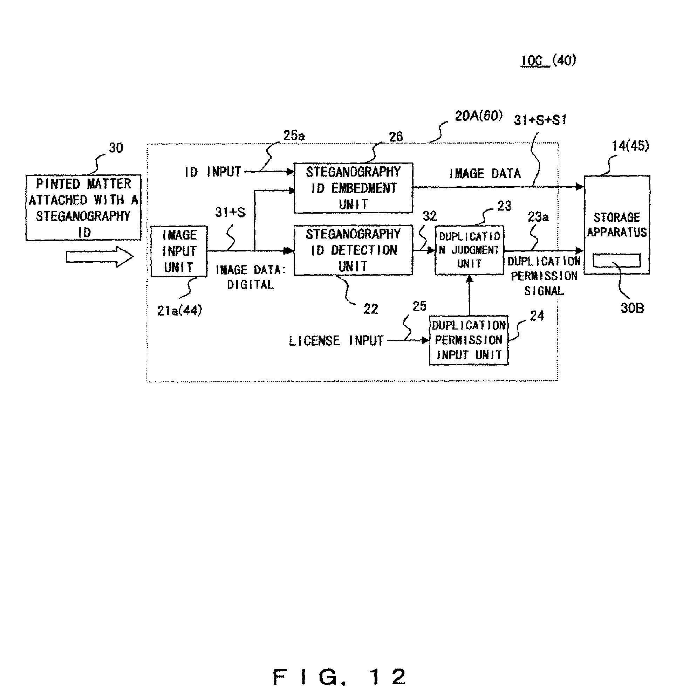

Likewise, Fig. 12 is a conceptual diagram exemplifying a comprisal of an image duplication apparatus according to yet another embodiment of the present invention. The image duplication apparatus 10C shown in Fig. 12 is a duplication control apparatus 20A, which is comprised by the above described image duplication apparatus 10A exemplified in Fig. 7, internally equipped with a steganography ID embedment unit 26, and the image duplication apparatus 10C embed a history management ID 25a anew as a steganography S1 in the image data 31 in the same principle as in the case of the above described image duplication apparatus 10B when duplicating image data 31 into an image medium 30B internally equipped in a storage apparatus 14, thereby accomplishing a management of duplication exceeding a certain generation.

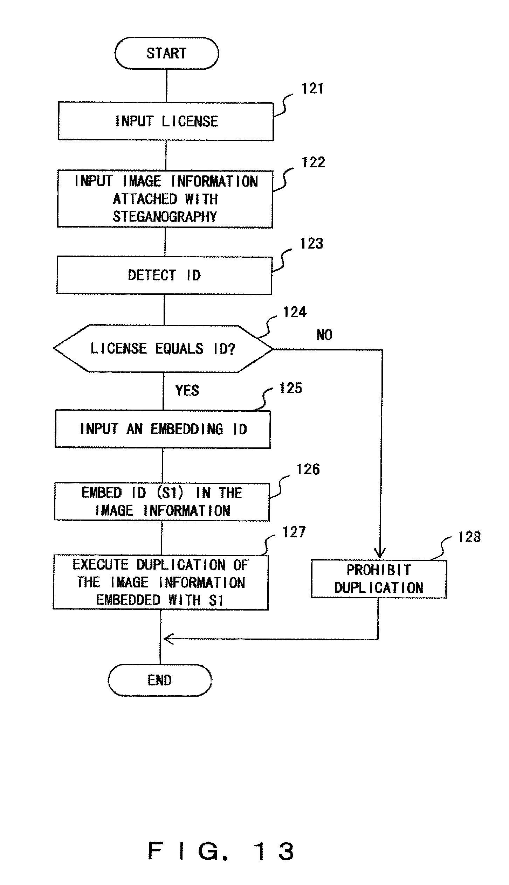

Fig. 13 is a flow chart exemplifying operations of the above described image duplication apparatus 10B and image duplication apparatus 10C.

That is, the first step sets license information 25 obtained from a provider of image data 31, or another source, in the duplication permission input unit 24 (step 121).

The next inputs the image data 31 embedded with an image ID 32 as a steganography S at the provider (step 122) and the steganography ID detection unit 22 detect a steganography S (i.e., an image ID 32) (step 123).

The next compares the image ID detected from the image data 31 with the license information 25 (step 124) and, if both of them are identical, first inputs a history management ID 25a as new embedded identifier information in the steganography ID embedment unit 26 (step 125), so that the steganography ID embedment unit 26 embeds the history management ID 25a as new steganography S1 in the image data 31 (step 126), followed by duplicating (i.e., printing onto the image medium 30A or storing in the image medium 30B) the image data 31 embedded with the original steganography S (i.e., the image ID 32) and with the steganography S1 (i.e., the history management ID 25a) in the manner as described above (step 127).

Meanwhile, if the image ID 32 is not identical with the license information 25 in the above described step 124, duplication is not carried out (step 128).

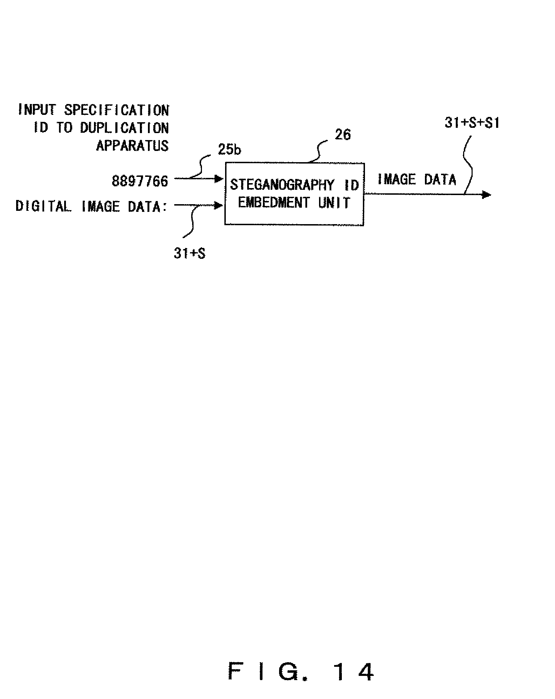

Fig. 14 is a conceptual diagram showing a modified example of the above described image duplication apparatus 10B and image duplication apparatus 10C.

The modified example shows the case of using a specific duplication apparatus ID 25b, as a history management ID 25a, such as product serial number uniquely attached to the image duplication apparatus 10B or image duplication apparatus 10C.

By this configuration, the specific duplication apparatus ID 25b enabling the identification of the image duplication apparatus 10B or image duplication apparatus 10C executing duplication of image data 31 is recorded as a steganography S1 to the post-duplication image data 31, in addition to an image ID 32 embedded as a steganography S which is uniquely attached to the present image data 31.

As a result, the image duplication apparatus 10B or image duplication apparatus 10C executing duplication, of image data 31 can be grasped from the steganography S1 included in the post-duplication present image data 31 and a history management (i.e., tracing) of the image data 31 and image medium 30 storing the present image data 31 can be accomplished.

As described above, the image duplication apparatus and image duplication control apparatus according to the present embodiment are capable of providing an apparatus with an improved duplication control performance.

That is, an accurate duplication control is accomplished also in an image duplication apparatus operating only by an analog output signal (e.g., a video signal) of a moving image and a static image.

Also, an accurate duplication control is accomplished for an image input from a medium, such as a printed matter, having a propensity of degrading an image quality.

A assured management of a permissibility of duplication is enabled by duplication license information (i.e., license information 25) provided, to both of an image ID 32 attached as a steganography to image data 31 of a target of management and of the image data 32.

Note that the present invention can apparently be changed in various manners possible with the scope thereof in lieu of being limited to the exemplified configurations put forth in the above described embodiments.

### Applicability to Industries:

The present invention is capable of providing an image duplication control technique easily incorporated into various apparatuses displaying and duplicating image information.

The present invention is also capable of accomplishing a duplication control of image information independent of an analog or digital state of image information.

The present invention is also capable of accomplishing a duplication control of image information without degrading an image quality thereof.

The present invention is also capable of accomplishing a duplication control of image information existing in various image media.

## Claims

1. An image duplication control apparatus, comprising:
an identifier information detection unit for extracting identifier information from image information in which the identifier information is embedded as secret information;
a permission condition input unit for inputting a duplication permission condition of the image information; and
a duplication judgment unit for controlling a duplication operation, of the image information based on whether or not the identifier information and duplication permission condition are identical.

2. The image duplication control apparatus according to claim 1, wherein
said secret information is a steganography which divides said image information into a plurality of blocks and manipulates characteristic information of the blocks and/or between blocks, thereby coding said identifier information and embedding it in the image information.

3. The image duplication control apparatus according to claim 1, wherein
said duplication judgment unit controls permitting or not permitting a duplication of said image information by judging whether or not said identifier information and duplication permission condition are identical, and also comprises a limitation unit for limiting the number of times of duplicating the image information to a predetermined value for each of the duplication permission condition.

4. The image duplication control apparatus according to claim 1, further comprising
a secret information embedment unit for embedding, in a duplicate of said image information as said secret information, second identifier information which is different from said identifier information embedded in the image information.

5. The image duplication control apparatus according to claim 1, further comprising
a secret information embedment unit for embedding, in a duplicate of said image information as said secret information, second identifier information which is different from said identifier information embedded in the image information, wherein
the second identifier information is identifier information for identifying an image duplication apparatus for duplicating the image information.

6. An image duplication control method, comprising the steps of:
inputting, from an image medium, image information in which, identifier information is embedded as secret information;
extracting the identifier information from the image information;
inputting a duplication permission condition for the image information; and
controlling an operation of duplicating the image information based on whether or not the identifier information and duplication permission condition are identical.

7. The image duplication control method according to claim 6, wherein
said secret information is a steganography which divides said image information into a plurality of blocks and manipulates characteristic information of the blocks and/or between blocks, thereby coding said identifier information and embedding it in the image information.

8. The image duplication control method according to claim 6, wherein
said image medium comprises at least one of a print medium on which said image information is visibly printed, a storage medium storing the image information and a communication medium for transmitting the image information.

9. The image duplication control method according to claim 6, controlling to permit or not permit a duplication of said image information by judging whether or not said identifier information and duplication permission condition are identical, and also limit the number of times of duplicating the image information to a predetermined value for each of the duplication permission condition.

10. The image duplication control method according to claim 6, further comprising the step of
embedding, in a duplicate of said image information as said secret information, second identifier information which is different from said identifier information embedded in the image information.

11. The image duplication control method according to claim 6, further comprising the step of
embedding, in a duplicate of said image information as said secret information, second identifier information which is different from said identifier information embedded in the image information, wherein
the second identifier information is identifier information, for identifying an image duplication apparatus for duplicating the image information.

12. An image production apparatus, comprising:
an input unit for inputting image information;
a steganography embedment unit for embedding identifier information utilized as a duplication condition for the image information in the aforementioned image information as a steganography which is not lost as a result of converting the image information into analog; and
an image output unit for outputting, to an image medium, the image information in which the steganography is embedded.

13. The image production apparatus according to claim 12, wherein
said image medium comprises at least one of a print medium on which said image information is visibly printed, a storage medium storing the image information, and a communication medium for transmitting the image information.

14. An image production method, comprising the steps of:
inputting image information;
embedding identifier information utilized as a duplication condition for the image information in the aforementioned image information as a steganography which is not lost as a result of converting the image information into analog; and
outputting, to an image medium, the image information in which the steganography is embedded.

15. The image production method according to claim 14, wherein
said image medium comprises at least one of a print medium on which said image information, is visibly printed, a storage medium storing the image information and a communication medium for transmitting the image information.

16. A program for making a computer constituting an image duplication apparatus execute the steps of:
inputting, from an image medium, image information in which identifier information is embedded as secret information;
extracting the identifier information from the image information;
inputting a duplication permission condition for the image information; and
controlling an operation of duplicating the image information based on the identifier information and duplication permission condition.

17. The program according to claim 16, wherein
said secret information is a steganography which divides said image information into a plurality of blocks and manipulates characteristic information of the blocks and/or between blocks, thereby coding said identifier information and embedding it in the image information.

18. The program according to claim 16, wherein
said image medium comprises at least one of a print medium on which said image information is visibly printed, a storage medium storing the image information, and a communication medium for transmitting the image information.

19. The program according to claim 16, controlling to permit or not permit a duplication of said image information by judging whether or not said identifier information and duplication permission condition are identical.

20. The program according to claim 16, controlling to permit or not permit a duplication of said image information by judging whether or not said identifier information and duplication permission condition are identical, and also limit the number of times of duplicating the image information to a predetermined value for each of the duplication permission condition.

21. The program according to claim 16, further comprising the step of
embedding, in a duplicate of said image information as said secret information, second identifier information which is different from said identifier information embedded in the image information.

22. The program according to claim 16, wherein
embedding, in a duplicate of said image information as said secret information, second, identifier information which is different from said identifier information embedded in the image information, wherein
the second identifier information is identifier information for identifying an image duplication apparatus.

23. A program for making a computer which controls an image production apparatus execute the steps of:
inputting image information;
embedding identifier information utilized as a duplication condition for the image information in the aforementioned image information as a steganography which is not lost as a result of converting the image information into analog; and
outputting, to an image medium, the image information in which the steganography is embedded.

24. The program according to claim 23, wherein
said image medium comprises at least one of a print medium on which said image information is visibly printed, a storage medium storing the image information, and a communication medium for transmitting the image information.

25. An image duplication apparatus, comprising:
an image construction unit for reconstruct digital image data from analog screen image data of a moving and/or static images in which identifier information is recorded by a steganography;
a identifier image detection unit for detecting identifier information embedded in the image data;
a duplication permission input unit for inputting a duplication permission condition; and
a duplication judgment unit for judging a duplication based on the identifier information detected by the identifier image detection unit and the permission condition which is input by the duplication permission input unit.

26. An image duplication apparatus, comprising:
an image input unit for converting to image data by inputting a printed matter on which identifier information is recorded as a steganography;
an identifier information detection unit for detecting identifier information embedded in the image data;
a duplication permission input unit for inputting a duplication permission condition; and
a duplication judgment unit for judging a permissibility of duplication based on the identifier information detected by the identifier image detection unit and the permission condition which is input by the duplication permission input unit.

27. The image duplication apparatus according to claim 25, wherein
said duplication judgment unit judges a permissibility of duplicating said image data based on an identicalness, or non-identicalness, of said identifier information detected by said identifier information detection unit with a duplication permission condition which is input by said duplication permission input unit.

28. The image duplication apparatus according to claim 25, wherein
said duplication judgment unit comprises a limitation unit for permitting a duplication of said image data containing the same identifier information only for a predetermined number of times.

29. The image duplication apparatus according to claim 25, further comprising
an identifier information embedment unit for outputting said image data after embedding new identifier information therein as said steganography.

30. The image duplication apparatus according to claim 25, further comprising
an identifier information embedment unit for outputting said image data after embedding new identifier information therein as said steganography for identifying said image duplication apparatus.
